(19) Europäisches Patentamt
European Patent Office
Office européen des brevets

(11) **EP 2 217 946 B1**

(12) **EUROPÄISCHE PATENTSCHRIFT**

(45) Veröffentlichungstag und Bekanntmachung des Hinweises auf die Patenterteilung:
**24.06.2015   Patentblatt 2015/26**

(21) Anmeldenummer: **08843301.6**

(22) Anmeldetag: **23.10.2008**

(51) Int Cl.:
***G01T 1/178*** *(2006.01)*

(86) Internationale Anmeldenummer:
**PCT/EP2008/008980**

(87) Internationale Veröffentlichungsnummer:
**WO 2009/053073 (30.04.2009 Gazette 2009/18)**

(54) **VORRICHTUNG ZUR ONLINE-BESTIMMUNG DES GEHALTS EINER SUBSTANZ UND VERFAHREN UNTER VERWENDUNG EINER SOLCHEN VORRICHTUNG**

DEVICE FOR THE ONLINE DETERMINATION OF THE CONTENTS OF A SUBSTANCE, AND METHOD FOR USING SUCH A DEVICE

DISPOSITIF POUR LA DÉTERMINATION EN LIGNE DU CONTENU D'UNE SUBSTANCE ET PROCÉDÉ UTILISANT UN TEL DISPOSITIF

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.10.2007   DE 102007051135**

(43) Veröffentlichungstag der Anmeldung:
**18.08.2010   Patentblatt 2010/33**

(73) Patentinhaber: **Katz, Elisabeth**
**72226 Simmersfeld (DE)**

(72) Erfinder: **KLEIN, Albert**
**72226 Simmersfeld (DE)**

(74) Vertreter: **Schön, Thilo**
**Patentanwälte**
**Frank Wacker Schön**
**Schwarzwaldstrasse 1A**
**75173 Pforzheim (DE)**

(56) Entgegenhaltungen:
**DD-A1- 54 508        DD-A1- 214 931**
**DD-A1- 265 696      DE-A1- 3 735 749**
**GB-A- 2 066 456      SU-A1- 939 086**
**US-A- 3 052 353**

- **TAYLOR P M: "On-line ash monitoring is now a reality with the natural gamma coal quality monitor" MINING ENGINEER LONDON 1989 NOV, Bd. 149, Nr. 338, November 1989 (1989-11), Seiten 205-208, 210, XP008108601**

**Beschreibung**

Technisches Gebiet der Erfindung

In der industriellen Meßtechnik wird die Messung der natürlichen Gammastrahlung einer Substanz zur Bestimmung verschiedener Materialparameter dieser Substanz eingesetzt.

Insbesondere wird dieses Verfahren zur Bestimmung des Aschegehaltes von Kohle und der Bestimmung des Kaligehalten von Kalisalz eingesetzt. Bei der Kaligehaltsmessung bestimmt man die Konzentration des radioaktiven Isotops K-40, das weltweit in der gleichen Konzentration in Kali enthalten ist. Bei der Aschegehaltsmessung kommen noch weitere radioaktive Isotope, die in der Asche enthalten sind, hinzu.

Bei einem ausreichend großen Meßvolumen, wenn die Messtiefe so groß ist, dass Sättigung eintritt, benötigt man lediglich einen großflächigen Detektor oder ein Detektor-Array, um in angemessener Zeit eine statistisch abgesicherte Zahl von Ereignissen zu detektieren und so nach entsprechender Kalibration die gewünschten Meßgrößen zu bestimmen. Dies ist im Allgemeinen der Fall, wenn der Detektor z.B. an einem Bunker angebracht wird.

In vielen Fällen ist aber eine Messung an Förderbändern oder unter anderen Meßbedingungen erwünscht, bei denen die sogenannte Sättigungsschichtdicke nicht erreicht wird. In diesen Fällen muß entweder die Schicht konstant gehalten werden oder es muss eine Kompensation der Schichtdicke oder allgemein des zur Verfügung stehenden Meßvolumens erfolgen.

Stand der Technik

Am meisten verbreitet ist hierbei die Messung an Förderbändern. Zur Kompensation der Bandbelegung benutzt man hierbei vornehmlich Bandwaagen. Hierbei kommen sowohl radiometrische als auch mechanische Bandwaagen zum Einsatz. Diese Aggregate sind entweder bereits beim Einbau der Konzentrationsbestimmung vorhanden, da die Bestimmung des Massenstroms von generellem Interesse ist, oder werden im Rahmen des Einbaus der Messeinrichtung installiert. Bei radiometrischen Bandwaagen wird hierbei der Detektor für die Bestimmung der natürlichen Gammastrahlung so weit von der Strahlung der Bandwaage entfernt eingebaut, daß die Messung der natürlichen Gammastrahlung durch diese radioaktiven Quellen nicht gestört wird. Bei mechanischen Bandwaagen ist meist der für die Messung erfaßte Bundabschnitt deutlich größer als der vom Detektor für die natürliche Gammastrahlung erfaßte Abschnitt. Dies führt dazu, daß statische Kalibrierungen (Kalibrierungen bei stehendem Band mit Hilfe meist schon im Voraus analysierter Proben) sehr schwierig und aufwendig und oft ungenau sind. Es werden entweder große Probenmengen benötigt oder die Probe muß verschoben werden, ohne daß das Flächengewicht und die Form bzw. das Querschnittsprofil der Probe verändert wird. Dies geschieht in Praxis dadurch, dass das Förderband, auf dem die zur Kalibrierung vorgesehene Probe - oft mehr als hundert Kilogramm - liegt, von Hand bewegt wird, so dass die Probe zwischen Bandwaage und Strahlungsdetektor verschoben wird. Bei dynamischen Messungen, d.h. bei Messungen mit laufendem Förderband unter betriebsähnlichen Bedingungen tritt dieses Problem zwar nicht auf, aber es müssen sehr große Materialmengen beprobt werden, was ebenfalls aufwendig und mit Fehlern behaftet ist.

Eine gattungsgemäße Vorrichtung ist aus US 3,052,353 bekannt.

**Gegenstand der Erfindung**

Ziel der vorliegenden Erfindung ist es eine Anordnung zu schaffen, die eine statische Kalibrierung mit einer vergleichsweise kleinen Probemenge ermöglicht, wobei diese Probe bei der Kalibrierung nicht veschoben wird.

Diese Aufgabe wir durch eine Vorrichtung mit den Merkmalen des Anspruch 1 gelöst.

Erfindungsgemäß wird die Messung der natürlichen Gammastrahlung und die der Flächenmasse ortsgleich durchgeführt.' Für die Bestimmung des Flächengewichtes wird ein Gamma- oder Röntgenstrahler eingesetzt, welcher die Substanz durchstrahlt und wobei die durch die Substanz transmittierte Strahlung zumindest teilweise auf den Detektor zur Messung der natürlichen Radioaktivität trifft, sodass dieser Detektor sowohl zur Messung der natürlichen Radioaktivität der Probe als auch der Messung der Abschwächung der eingestrahlten Strahlung und somit der Bestimmung der Flächenmasse dient. Es müssen jedoch Mittel vorhanden sein, welche die vom Detektor gemessene intensität der Gammastrahlung des Isotopes und die der transmittierten Strahlung unterscheidbar machen. Dies kann auf wenigstens zwei Arten erreicht werden:

Zum einen ist es möglich, einen Detektor einzusetzten, der über eine ausreichende Energieauflösung verfügt. Der mindestens eine zusätzliche radioaktive Strahler emittiert Energiequanten, deren Energien sich von den Energien der natürlichen radioaktiven Strahlung so stark unterscheiden, daß bei simultaner Erfassung die natürliche Gammastrahlung und die durch das bzw. die Nuklide/Röntgenröhre verursachte Strahlung getrennt werden kann. Für die Auswertung wird zu diesem Zwecke dem Detektor beispielsweise ein Vielkanalanalysator nachgeschaltet, der das Spektrum der auftretenden Strahlung erfaßt. In einer Auswerteeinheit kann dann die natürliche und die durch das bzw. die Nuklide/Röntgenröhre verursachte Strahlung getrennt und die belegungskompensierte Konzentration berechnet werden. Geeignete Nuklide sind insbesondere Cobalt, Americium und Cäsium.

Ist die natürliche Gammastrahlung auf wenige Spektral-Linien beschränkt, kann die Vielkanalanalysator auch durch eine ausreichende Anzahl von Diskriminatoren ersetzt werden, mit denen die Trennung der Spektral-Linien und der im wesentlichen durch den Comptoneffekt verursachten Verschleppung von Impulsen in den niederenergetischen Bereich möglich ist.

Alternativ hierzu kann gemäß Anspruch 5 die Trennung der Signale der einzelnem Strahler untereinander und der natürlichen Gammastrahlung dadurch erreicht werden, dass die Strahlung der Nuklidelder Röntgenröhre alternierend ausgeblendet wird, wobei ein gechoppter Betrieb besonders vorteilhaft ist (Anspruch 6).

Die erfindungsgemäße Vorrichtung eignet sich gemäß Anspruch 13 insbesondere zur Bestimmung des Kaligehaltes in Kalisalz und gemäß Anspruch 14 zur Bestimmung des Aschegehalts in Kohle.

Weitere bevorzugte Ausführungsformen ergeben sich aus den weiteren Unteransprüchen.

Kürzbeschreibung der Zeichnungen

Es zeigen:

Figur 1 — Eine schematische Darstellung einer ersten Ausführungsförm der Erfindung,

Figur 2 — einen Querschnitt entlang der Linie I-I aus Figur 1, ebenfalls in schematischer Darstellung, wobei unterschiedliche Mengen an Sub stanz eingezeichnet sind,

Figur 3 — typische Spektren bei unterschiedlichen Substanzmengen,

Figur 4 — den Messbereich bei Vorhandensein von zwei Kollimatoren in schematischer Darstellung,

Figur 5 — ein zweites Ausführungsbeispiel der ersten Ausführungsform in schematischer Darstellung und

Figur 6 — eine zweite Ausführungsform der Erfindung.

Beschreibung bevorzugter Ausführungsformen

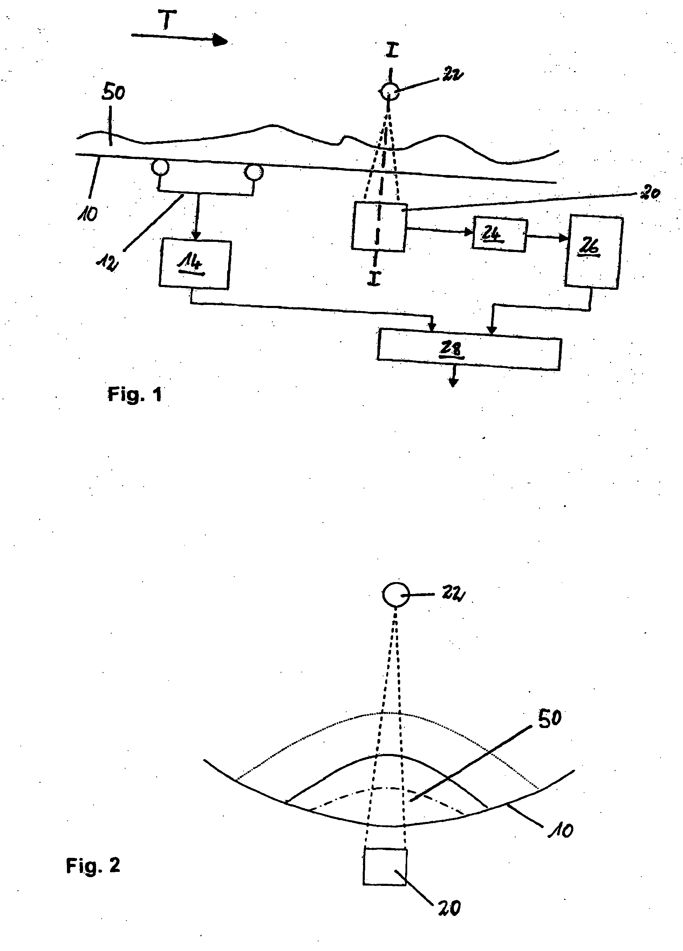

Die Figur 1 zeigt ein erstes Ausführungsbeispiel einer ersten Ausführungsform der Erfindung mit einer stark schematisierten Darstellung. Die hier dargestellte Vorrichtung dient der Bestimmung der Gesamtkaliumförderung auf einem Förderband 10. Auf dem Förderband 10 wird Kaliumsalz 50 in Richtung T gefördert. Ziel der dargestellten Vorrichtung ist es, die Gesamtfördermenge an Kalium pro Zeiteinheit zu bestimmen. Hierzu weist die Vorrichtung eine mechanische Bandwaage 12 mit entsprechender Auswerte-Einheit 14 auf. Die mechanische Bandwaage 12 mit Auswerteeinheit 14 dient dazu, die Gesamttonage an Kaliumsalz zu bestimmen. Da der Kalium-Anteil im Kaliumsalz schwanken kann, kann aus der Gesamttonage nicht unmittelbar auf die Kalium-Tonage geschlossen werden. Es ist deshalb eine Messvorrichtung vorhanden, welche den prozentualen Anteil des Kaliums im Kaliumsatz bestimmt.

Diese Messeinrichtung umfasst eine Cäsium 137 Quelle 22, welche in diesem Ausführungsbeispiel oberhalb des Förderbandes 10 angeordnet ist, und einen Detektor 20, welcher unterhalb des Förderbandes 10 angeordnet ist. Der Detektor kann beispielsweise ein NaJ-Detektor sein. Die Messeinrichtung umfasst weiterhin einen dem Detektor 20 nachgeschalteten Vielkanal-Analysator 24 sowie einen Messcomputer 26 zur Auswertung der Signale des Vielkanal-Analysators 24. Der Ausgang der Auswerteeinheit der Bandwaage 14 und der Ausgang des Messcomputers 26 sind mit einer Ausgabe-Einheit 28 verbunden, welche die gewünschten Informationen darstellt und ausgibt, beispielsweise Gesamtstunden-Tonage an Kaliumsalz sowie die Gesamtstunden-Tonage an Kalium.

Die Funktionsweise der Messeinrichtung wird nun mit Bezug auf die Figuren 1 bis 3 näher erläutert, wobei die Figur 2 einen Schnitt durch das Förderband an der Stelle der Messeinrichtung zeigt und unterschiedlich hohe Schüttungen des zu messenden Kalisalzes auf dem Förderband 10 eingezeichnet sind. Hierbei steht die gepunktete Linie für die maximale Schüttung, die durchgezogene Linie für eine mittlere Schüttung und die gestrichpunktete Linie für eine geringe Schüttung. Die Cäsium 137-Quelle 22 durchstrahlt zumindest einen Teil des auf dem Förderband 10 geförderten Kaliumsalzstromes, wobei die Geometrie so eingerichtet ist, dass die gesamte, durch das Kaliumsalz transmittierte Strahlung auf den Detektor 20 auftrifft. Die von der Cäsium 137-Quelle 22 abgestrahlten Gammaquanten haben eine Energie von 660 eV, so dass die Absorption dieser Strahlung von der durchstrahlten Substanzmenge, nämlich von der Flächenmasse in bekannter Art und Weise abhängt.

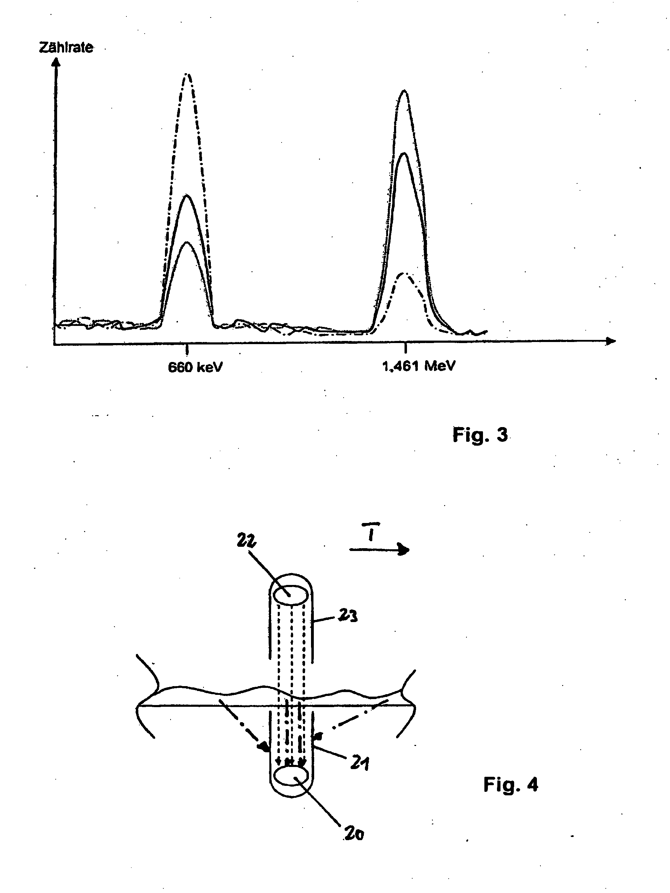

Neben der - gegebenenfalls durch das Kaliumsalz transmittierten - Strahlung der Cäsium 137-Quelle 22 trifft auf den Detektor 20 weiterhin die in den entsprechenden Raumrichtungsbereich abgegebene natürliche Strahlung des Kalium-Isoptopes K-40 mit einer Quantenenergie von 1,461 MeV. Die maximale Schüttung des Kalisalzes ist so, dass weder eine nahezu vollständige Absorption der 660 keV-Strahlung, noch eine Sättigung der natürlichen Gammastrahlung des K 40 eintritt. Somit ergeben sich für verschiedene Schüttungen Spektren, wie sie beispielhaft in Figur 3 dargestellt sind:

Bei geringer Schüttung (gestrichpunktete Linie) ist die Absorption der Cs-137-Strahlung gering, das vom Detektor 20 gemessene Signal groß. Das Signal der natürlichen K-40-Strahlung bei 1,461 MeV ist entsprechend klein. Wird bei gleichbleibender Zusammensetzung der durchstrahlten Substanz deren Schütthöhe vergrößert, so verringert sich entsprechend der Peak bei 660 keV, während sich der Peak bei 1,461 MeV entsprechend vergrößert. Die durchgezogene Linie zeigt das Spektrum der mittleren Schüttung, die gepunktete Linie das Spektrum der hohen Schüttung.

Betrachtet man die Abhängigkeit der Zählrate der K-40-Strahlung in Abhängigkeit der Schichtdicke in linearer Näherung, so ergibt sich folgender Zusammenhang:

$$\frac{F_{K-40-Peak}}{\ln \frac{F_{Cs-137-Peak}}{F_{leer}}} = konst(Konz_{K-40})$$

mit:

| | |
|---|---|
| $F_{K-40-Peak}$ | = Fläche unter dem K-40-Peak |
| $F_{Cs-137-Peak}$ | = Fläche unter dem Cs-137-Peak |
| $F_{leer}$ | = Fläche unter dem Cs-137-Peak bei leerem Förderband |
| $konst(Konz_{K-40})$ | = Konstante, die bei gegebener Geometrie nur von der K-40-Konzentration abhängt. |

Man könnte diesen Ansatz als "semilinearen" Ansatz bezeichnen. Dieser ist dann möglich, wenn man durch starke Kollimation eine einfache Messgeometrie erreichen kann und wenn die maximale betrachtete Schüttung nicht sehr groß ist.

Die Flächen unter den Peaks und den entsprechenden Quotienten kann man unmittelbar bestimmen, so dass man bei einer Änderung des Quotienten unmittelbar auf eine Änderung des K-40 und somit des Kalium-Gehaltes schließen kann. Die Abhängigkeit von $konst(Konz_{K-40})$ von der K-40-Konzentration kann man häufig als linear betrachten.

Um eine höhere Genauigkeit zu erzielen, wird man zumeist berücksichtigen, dass die Zählrate des K-40-Signals nicht linear mit der Bewegung ansteigt, da die detektornahe Schicht Photonen aus der detektorfernen Schicht absorbiert. Bei sehr großen Schichtdicken tritt hier eine Sättigung ein, hier ist das beschriebene Näherungsverfahren nicht mehr einsetzbar. Ferner muss man berücksichtigen, dass bei größeren Schichtdicken das an der Kalium-Messung beteiligte Volumen nicht linear sondern stärker ansteigt, da auch von der Seite mehr Strahlung in den Detektor fällt. Das erfasste Volumen ist somit kein Zylinder, eher ein Kegel. Der Öffnungswinkel kann durch einen Kollimator definiert werden. Die für die Auswertung erforderlichen Algorithmen sind bekannt und werden derzeit beispielsweise bei Kalibandwaagen oder Aschegehaltsmessgeräten, die auf der Messung natürlicher Gammastrahlung basieren, eingesetzt.

In der Praxis wird man entsprechende Kalibrationskurven erzeugen, indem man Messungen mit unterschiedlich hohen Schüttungen durchführt. Die Kalibration ist jedoch wenig aufwendig, da einerseits nur eine relativ geringe Materialmenge benötigt und da andererseits keine Bewegung des Förderbandes notwendig ist. Die statische Kalibrierung ermöglicht es, eine Probe bei verschiedenen Schichtdicken (Schüttungen) auf einfache Weise zu messen.

Die Kalibrierung und die mathematische Behandlung wird erheblich vereinfacht, wenn der durchstrahlte Bereich der Substanz, welcher vom Detektor 20 "gesehen" wird, identisch mit dem Bereich der Substanz ist, dessen K-40-Strahlung auf den Detektor 20 auftrifft. Um dies zu erreichen, können ein oberer und ein unterer Kollimator 23,21 vorhanden sein (Figur 4), welche den betrachteten Raumbereich definieren. Insbesondere der untere Kollimator 21 ist von erheblicher Bedeutung, da sonst auch K-40-Strahlung von Substanz gemessen wird, welche nicht in einem Bereich liegt, welcher von der Cäsium 137-Quelle 22 durchstrahlt wird und deren transmittierte Strahlung auf den Detektor 20 aufkommt. Der untere Kollimator muss für die 1,461 MeV-Strahlung im wesentlichen undurchdringlich sein und besteht vorzugsweise aus Blei.

Ein Spektrum, wie es in Figur 3 dargestellt ist, wird vom Vielkanal-Analysator 24 erzeugt und vom Messcomputer 26 mit den bekannten Algorithmen ausgewertet. Da die beiden Peaks einen großen Abstand voneinander haben, wäre es auch möglich, den Vielkanal-Analysator 24 durch eine Diskriminatorschaltung zu ersetzen.

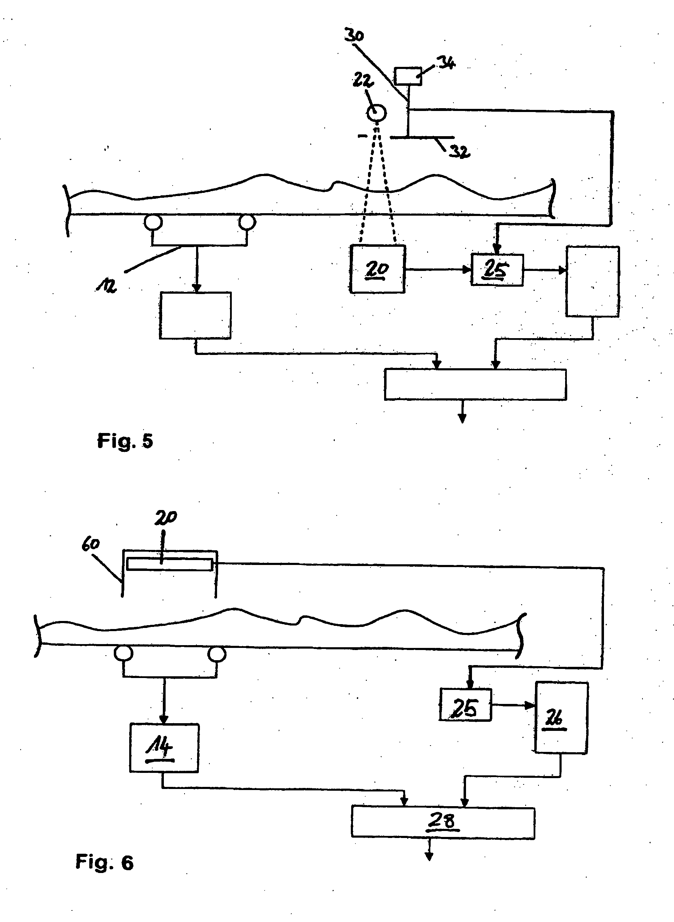

Die Figur 5 zeigt ein zweites Ausführungsbeispiel der ersten Ausführungsform der Erfindung, welche ohne Vielkanal-Analysator oder Diskriminatorschaltung auskommt. Das Messprinzip ist grundsätzlich dasselbe wie oben beschrieben, es werden nämlich die Peaks bei 660 keV und 1,461 MeV betrachtet. Um hier unterscheidbar zu machen, welche vom Detektor 20 gemessene Impulse von welcher Strahlungsquelle kommen, ist im Strahlengang der Cs-137 Quelle 22 oberhalb des Förderbandes 10 ein aus einem Blendenrad 32 und einem Motor 34 beste-hender Strahlzerhacker 30 (Chopper) angeordnet. Die Signale des Detektors 20 werden einem Pulszähler 25 zugeleitet, welcher vom Strahlzerhacker 30 synchronisiert wird, so dass der Pulszähler 25 "weiß", welche gezählten Pulse zum 660 keV und welche Pulse zur Summe aus 660 keV und 1,461 MeV-Peak gehören. Bei der Auswertung muss hier zunächst die Differenz gebildet werden, so dass man separate "Zählraten" für die beiden Energien erhält. Die rechnerische Auswertung entspricht dem oben Beschriebenen.

Die Figur 6 zeigt schematisch eine zweite Ausführungsform der Erfindung. Wie oben dargelegt wurde, dient die Messung der Absorption der von der Cäsum-137 Quelle 22 kommenden Strahlung der Bestimmung der Masse des Messbereiches des Kaliumsalzes, also der Bandbelegung in einem bestimmten Bandabschnitt. Diese Information kann natürlich grundsätzlich auch durch die mechanische Bandwaage erhalten werden, wobei hier jedoch zu beachten ist, dass die betrachtete Substanzmenge relativ groß ist. Idealerweise sind der Bereich, dessen Masse von der Bandwaage 12 gemessen wird, und derjenige Bereich, dessen natürliche K-40-Strahlung gemessen wird, identisch, wie dies in Figur 6 schematisch angedeutet ist. Auch hier wird der Messbereich durch einen Kollimator 60 bestimmt. Ein Nachteil der zweiten Ausführungsform gegenüber der ersten Ausführungsform ist, dass man zum Kalibrieren wesentlich größere Mengen des Kaliumsalzes benötigt.

Als weitere Alternative zur Kompensation der Schütthöhe kann ein Oberflächenscanner eingesetzt werden, welcher am Ort der Bestimmung der K-40 Strahlung das Profil des auf dem Förderband geförderten Kalisalzes misst. Bei Annahme konstanter Dichte kann aus der Kenntnis des Profils die Masse berechnet werden, welche vom Detektor 20 "gesehen" wird, so dass auch hier eine entsprechende Belegungskompensation durchgeführt werden kann. Ein solcher Oberflächenscanner kann beispielsweise mit Lasern arbeiten.

Die vorliegende Erfindung wurde anhand der Bestimmung der Kaliummenge in einem Kalisalz dargestellt. Diese Methode kann jedoch grundsätzlich auch bei anderen Substanzen angewendet werden, solange diese Isotope haben, welche Gammastrahlen einer passenden Wellenlänge aussenden, und bei denen sichergestellt ist, dass die Isotopenverteilung konstant und bekannt ist.

Im gezeigten Ausführungsbeispiel ist der Gamma- oder Röntgenstrahler ein Cäsium-137-Strahler. Andere mögliche Gammastrahler sind Americium- oder Cobaltstrahler. Statt eines Gammastrahlers kann auch eine Röntgenröhre als Röntgenstrahler eingesetzt werden.

Bezugszeichenliste

| 10 | Förderband |
|----|-----------|
| 12 | meachanische Bandwaage |
| 14 | Auswerte-Einheit der Bandwaage |
| 20 | Detektor |
| 21 | unterer Kollimator |
| 22 | Cs-137-Quelle |
| 23 | oberer Kollimator |
| 24 | Vielkanal-Analysator |
| 25 | Pulszähler |
| 26 | Messcomputer |
| 28 | Ausgabe-Einheit |
| 30 | Chopper |
| 32 | Blendenrad |
| 34 | Motor |
| 50 | Kalisalz |
| 60 | Kollimator |

**Patentansprüche**

1. Vorrichtung zur Online-Bestimmung des Gehaltes einer Substanz, welche ein gammastrahlendes Isotop aufweist, wobei die Vorrichtung mindestens einen Detektor (20) umfasst, welcher die natürliche Gammastrahlung dieses isotopes misst, **dadurch gekennzeichnet, dass** die Vorrichtung dazu eingerichtet ist, ortsgleich eine Messung zur Bestimmung der Flachenmasse der Substanz Im Erfassungsbereich des Detektors (20) oder eines repräsentativen Teilbereichs durchzuführen, wobei ein Gamma- oder Röntgen-Strahler (22) vorhanden ist, welcher dazu eingerichtet ist, die Substanz zu durchstrahlen, wobei die durch die Substanz transmittierte Strahlung zumindest teilweise auf den Detektor (20) trifft, so dass der Detektor auch die transmittierte Strahlung misst, und dass Unterscheidungsmittel vorhanden sind, welche dazu eingerichtet sind, die vom Detektor gemessene Intensität der Gammastrah- 7 lung des Isotopes und die der transmittierten Strahlung unterscheidbar zu machen.

2. Vorrichtung nach Anspruch 1, **dadurch gekennzeichnet, dass** der vom Detektor (20) erfasste Bereich durch mindestens einen Kollimator (21) eingeschränkt wird.

3. Vorrichtung nach einem der Ansprüche 1 oder 2, **dadurch gekennzeichnet, dass** die Unterscheidungs mittel einen dem Detektor (20) nachgeschalteten Vielkanal-Analysator (24) umfassen.

4. Vorrichtung nach einem der Ansprüche 1 oder 2, **dadurch gekennzeichnet, dass** die Unterscheidungsmittel einen dem Detektor nachgeschalteten Diskriminator zur Realisierung von Schwellen beziehungsweise Fenstern umfassen.

5. Vorrichtung nach einem der Ansprüche 1 oder 2, **dadurch gekennzeichnet, dass** die Unterscheidungsmittel einen zwischen Gamma- oder Röntgen-Strahler und Substanz angeordneten Strahlunterbrecher (32) umfassen.

6. Vorrichtung nach Anspruch 5, **dadurch gekennzeichnet, dass** der Strahlunterbrecher getaktet arbeitet (Chopper).

7. Vorrichtung nach einem der vorangehenden Ansprüche, **dadurch gekennzeichnet, dass** die Substanz mit Hilfe eines Transportmittels durch die Messeinrichtung transportiert wird.

8. Vorrichtung nach Anspruch 7, **dadurch gekennzeichnet daß** der Substanzstrom auf einem Förderband (10) gefördert wird.

9. Vorrichtung nach einem der Ansprüche 7 oder 8, **dadurch gekennzeichnet, daß** sie weiterhin eine Einrichtung zur Massenstrommessung aufweist.

10. Vorrichtung nach Anspruch 9, **dadurch gekennzeichnet, daß** die Einrichtung zur Massenstrommessung eine mechanische Bandwaage (12) ist.

**11.** Vorrichtung nach Anspruch 9, **dadurch gekennzeichnet, daß** die Einrichtung zur Massenstrommessung eine radiometrische Bandwaage ist.

**12.** Vorrichtung nach Anspruch 1, **dadurch gekennzeichnet, daß** unter Annahme einer konstanten Dichte die Flächenmasse mit mindestens einem Abstandssensor bestimmt wird.

**13.** Verfahren unter Verwendung einer Vorrichtung nach einem der vorangegangenen Ansprüche, **dadurch gekennzeichnet, daß** die zu messende Substanz Kalium enthält und die Konzentration des radioaktiven Isotop K-40 bestimmt wird.

**14.** Verfahren unter Verwendung einer Vorrichtung nach einem der Ansprüche 1 bis 12, **dadurch gekennzeichnet, daß** die zu messende Substanz Kohle ist und die natürliche Gammastrahlung zur Bestimmung des Aschegehaltes herangezogen wird und in Kombination mit einer Massenstrommessung die geförderte Aschemenge und der Ascheinhalt einer Charge bestimmt wird.

**Claims**

**1.** Device for the online determination of the contents of a substance having a gamma-radiating isotope, wherein the device comprises at least one detector (20), which measures the natural gamma radiation of this isotope, **characterized in that** the device is arranged such as to carry out at the same location a measurement for determining the mass per unit area of the substance within the detection region of the detector (20) or a representative partial region, wherein a gamma or X-ray radiating device (22) is present, which is arranged such as to irradiate the substance, wherein the radiation transmitted through the substance impinges at least partially onto the detector (20), such that the detector also measures the transmitted radiation, and that differentiation means are present which are arranged such as to render distinguishable the intensity of the gamma radiation of the isotope and of the transmitted radiation measured by the detector.

**2.** Device according to claim 1, **characterized in that** the region detected by the detector (20) is restricted by at least one collimator (21).

**3.** Device according to one of claims 1 or 2, **characterized in that** the differentiation means comprise a multi-channel analyzer (24) arranged downstream of the detector (20).

**4.** Device according to one of claims 1 or 2, **characterized in that** the differentiation means comprise a discriminator downstream of the detector, for the realization of thresholds or windows respectively.

**5.** Device according to one of claims 1 or 2, **characterized in that** the differentiation means comprise a radiation interrupter (32) arranged between the gamma or X-ray radiator and the substance.

**6.** Device according to claim 5, **characterized in that** the radiation interrupter operates in a pulsed manner (chopper).

**7.** Device according to one of the preceding claims, **characterized in that** the substance is transported through the measuring device with the aid of transport means.

**8.** Device according to claim 7, **characterized in that** the substance flow is conveyed on a conveyor belt (10).

**9.** Device according to one of claims 7 or 8, **characterized in that** it further comprises a device for the mass flow measurement.

**10.** Device according to claim 9, **characterized in that** the device for the mass flow measurement is a mechanical band scale (12).

**11.** Device according to claim 9, **characterized in that** the device for the mass flow measurement is a radiometric band scale.

**12.** Device according to claim 1, **characterized in that**, on the assumption of a constant density, the mass per unit area is determined with at least one distance sensor.

**13.** Method making use of a device in accordance with one of the preceding claims, **characterized in that** the substance to be measured contains potassium and the concentration of the radioactive isotope K-40 is determined.

**14.** Method making use of a device in accordance with one of claims 1 to 12, **characterized in that** the substance to be measured is carbon and the natural gamma radiation is drawn on for the determination of the ash content, and, in combination with a mass flow measurement, the ash quantity conveyed and the ash content of a batch are determined.

**Revendications**

**1.** Dispositif pour la détermination en ligne du contenu d'une substance ayant un isotope émetteur gamma, dans lequel le dispositif comprend au moins un détecteur (20), qui mesure le rayonnement gamma naturel de cet isotope,

**caractérisé en ce que** le dispositif est conçu pour réaliser au même endroit une mesure pour déterminer la masse surfacique de la substance dans la zone de détection du détecteur (20) ou d'une partie de zone représentative, et il est prévu un émetteur de rayons X ou gamma (22), qui est conçu pour irradier la substance, le rayonnement transmis à travers la substance rencontrant au moins partiellement le détecteur (20), de sorte que le détecteur mesure également le rayonnement transmis, et **en ce qu'**il est prévu des moyens de discrimination conçus pour rendre discriminables l'intensité de l'émission gamma de l'isotope mesurée par le détecteur et celle du rayonnement transmis.

2. Dispositif selon la revendication 1, **caractérisé en ce que** la zone détectée par le détecteur (20) est limitée par au moins un collimateur (21).

3. Dispositif selon l'une des revendications 1 ou 2, **caractérisé en ce que** les moyens de discrimination comprennent un analyseur à canaux multiples (24) monté en aval du détecteur (20).

4. Dispositif selon l'une des revendications 1 ou 2, **caractérisé en ce que** les moyens de discrimination comprennent un discriminateur pour la réalisation de seuils respectivement de fenêtres monté en aval du détecteur.

5. Dispositif selon l'une des revendications 1 ou 2, **caractérisé en ce que** les moyens de discrimination comprennent un hacheur de rayonnement (32) agencé entre l'émetteur de rayons X ou gamma et la substance.

6. Dispositif selon la revendication 5, **caractérisé en ce que** le hacheur de rayonnement travaille de manière cadencée (Chopper).

7. Dispositif selon l'une quelconque des revendications précédentes, **caractérisé en ce que** la substance est transportée à travers le dispositif de mesure à l'aide d'un moyen de transport.

8. Dispositif selon la revendication 7, **caractérisé en ce que** le flux de substance est convoyé sur une bande transporteuse (10).

9. Dispositif selon l'une des revendications 7 ou 8, **caractérisé en ce qu'**il présente en plus un dispositif pour mesurer le débit massique.

10. Dispositif selon la revendication 9, **caractérisé en ce que** le dispositif pour mesurer le débit massique est une bascule mécanique à courroie (12).

11. Dispositif selon la revendication 9, **caractérisé en ce que** le dispositif pour mesurer le débit massique est une bascule radiométrique à courroie.

12. Dispositif selon la revendication 1, **caractérisé en ce que** la masse surfacique est déterminée avec au moins un capteur de distance, en supposant une densité constante.

13. Procédé utilisant un dispositif selon l'une quelconque des revendications précédentes, **caractérisé en ce que** la substance à mesurer contient du potassium et on détermine la concentration de l'isotope radioactif K-40.

14. Procédé utilisant un dispositif selon l'une des revendications 1 à 12, **caractérisé en ce que** la substance à mesurer est du charbon et on utilise le rayonnement gamma naturel pour déterminer la teneur en cendres et on détermine en combinaison avec une mesure du débit massique la quantité de cendres convoyée et la teneur en cendres d'un lot.

T →

**Fig. 1**

**Fig. 2**

Zählrate

660 keV          1,461 MeV

**Fig. 3**

22

23

21

20

**Fig. 4**

**Fig. 5**

**Fig. 6**

**IN DER BESCHREIBUNG AUFGEFÜHRTE DOKUMENTE**

**In der Beschreibung aufgeführte Patentdokumente**

- US 3052353 A